## Europäisches Patentamt

## European Patent Office

## Office européen des brevets

(19)

(11) Publication number: **0 026 564**
**B1**

(12) **EUROPEAN PATENT SPECIFICATION**

(45) Date of publication of patent specification: **25.01.84**

(51) Int. Cl.³: **A 62 B 35/02, B 60 R 21/10**

(21) Application number: **80302622.8**

(22) Date of filing: **31.07.80**

(54) Safety belt stop.

<table>
<tr><td>

(30) Priority: **03.08.79 GB 7927186**

(43) Date of publication of application:
**08.04.81 Bulletin 81/14**

(45) Publication of the grant of the patent:
**25.01.84 Bulletin 84/4**

(84) Designated Contracting States:
**AT BE CH DE FR LI SE**

(56) References cited:
**DE - A - 2 551 642**
**DE - A - 2 620 411**
**DE - A - 2 635 349**
**DE - A - 2 730 510**
**DE - A - 2 751 984**
**DE - B - 2 047 706**
**DE - U - 7 626 027**
**DE - U - 7 638 852**
**DE - U - 7 824 661**
**FR - A - 2 381 531**

</td><td>

(73) Proprietor: **Johnson, Colin Barclay**
**1 Ebor Close**
**Ferndown, Nr Wimborne, Dorset (GB)**

(72) Inventor: **Johnson, Colin Barclay**
**1 Ebor Close**
**Ferndown, Nr Wimborne, Dorset (GB)**

(74) Representative: **Valentine, Francis Anthony**
**Brinsley et al,**
**REDDIE & GROSE 16 Theobalds Road**
**London WC1X 8PL (GB)**

</td></tr>
</table>

Courier Press, Leamington Spa, England.

Safety belt stop

This invention related to stops for an inertia-reel safety belt of the type used in motor vehicles and defined in the first portion of claim 1.

One problem with such safety belts is that, in use, a force which urges the belt onto a storage reel causes a constant pressure to bear upon the chest of the user. Some users find this pressure uncomfortable.

It has accordingly already been proposed in DE—A—2 635 349 to mount on the belt a stop which can the clamped to or released and independently moved along the belt. Such a stop comprises a body member and a clamp member together defining a passage through the stop for a run of the belt, the body member having a lateral entry to the passage for lateral introduction of an intermediate portion of the belt, the clamp member being captively retained to the body member to close the lateral entry and being movable relatively thereto.

The stops disclosed in DE—A—2 635 349 require externally projecting elements such as nuts, screws or clamping levers which may snag the wearer's clothing. Where nuts and screws are used, they may work loose to the extent of becoming detached and lost. If insufficiently loosened, the belt will not be properly rewound when out of use. Similarly where the stop includes a lever-operated clamp, the latter may re-engage, after being released, as the result of jerks caused by the rapid rewinding of the belt. If the belt is not fully rewound when out of use, it may be damaged by being caught in a door or even trailing on the road.

DE—U—7 626 027 shows a similar arrangement but mounted on the inertia-reel assembly, where it is difficult of access for adjustment and results in the wearer being in the wrong position when making the adjustment.

According to the present invention the stop comprises the features defined in the characterising portion of claim 1.

An embodiment of the invention will now be described by way of example with reference to the accompanying drawings in which:—

Figure 1 shows a perspective view of a safety belt stop in use on a lap-and-diagonal inertia reel safety belt in a vehicle;

Figure 2 is a partly cut-away elevational view of a safety belt stop shown in Figure 1 on an enlarged scale;

Figure 3 is a sectional view along the line III—III of Figure 2;

Figure 4 is a sectional view along the line IV—IV of Figure 2; and

Figure 5 shows a view similar to Figure 2, but of a modified safety belt stop.

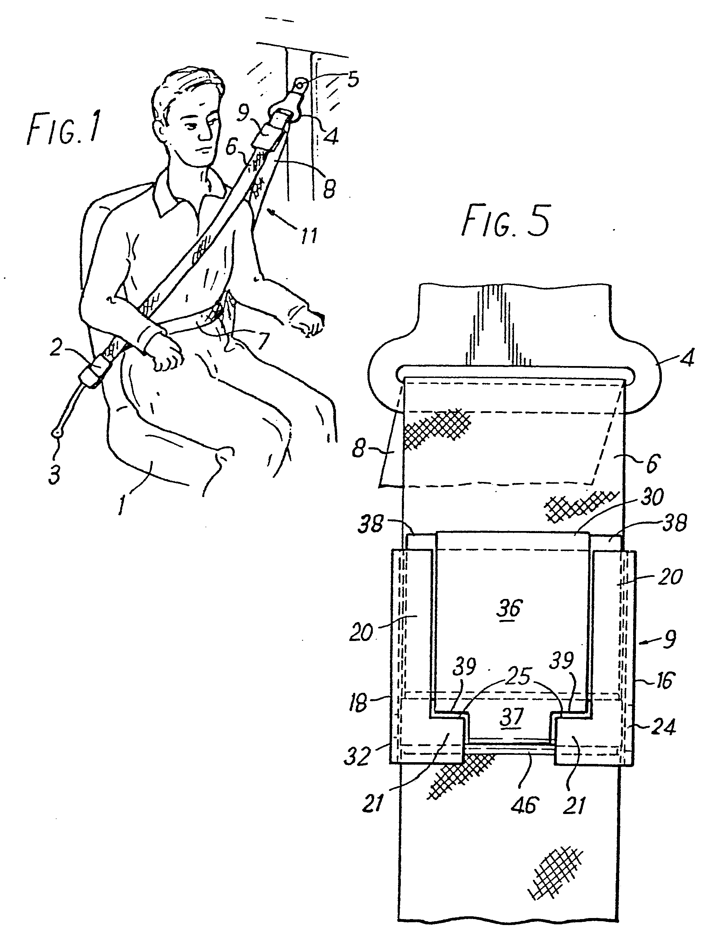

Figure 1 shows an inertia-reel safety belt 11 in a motor vehicle. One end (not shown) is secured to a first lower anchorage in the floor of the vehicle to one side and immediately behind a vehicle seat 1. A first run 7 of the belt 11 passes across the lap of the occupant of the seat 1 to a loop of a buckle 2 secured to a second lower anchorage 3 fixed to the vehicle's structure. A second run 6 passes diagonally across the occupant's chest to a guide 4 fixed to an upper anchorage 5, close to the occupant's shoulder, and a third run 8 passes down onto an inertia-reel unit (not shown) which is adjacent to the first anchorage.

In accordance with the invention an adjustable stop 9 is mounted on the diagonal run 6 of the belt 11 in a position to abut the guide 4 to prevent the tension in the belt 11 exerted by the inertia-reel unit causing uncomfortable pressure on the chest of the user.

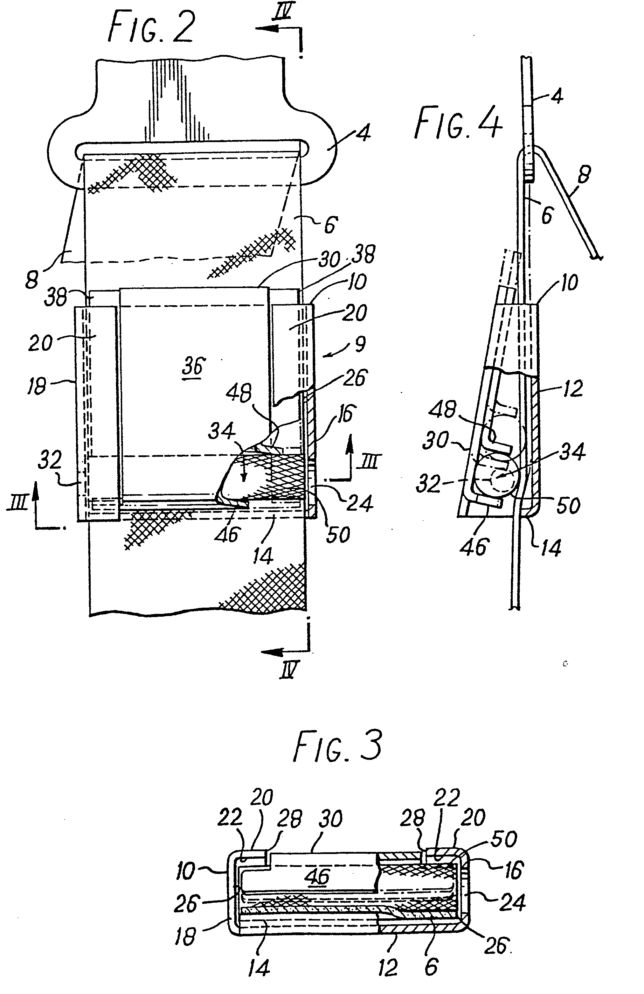

The stop 9, shown in Figures 2 to 4, comprises a body 10, a slide 30 and a knurled roller 50.

The body 10 is folded from sheet metal or moulded from plastics material and comprises a base 12 having a lateral lip 14 at one end and a pair of longitudinal side-walls 16, 18 each having a flange 20 along its upper edge. Each flange 20 has a lower surface 22 and an inner edge 28. The internal width of the body 10 between inner faces 26 of the side-walls 16, 18 is equal to the width of a standard safety belt.

Each side-wall 16, 18 tapers such that its height adjacent to the lip 14 is twice its height at its opposite end. The side-wall 16 has a circular hole 24, through which the rod 50 may pass, adjacent to its wider end and the side-wall 18 may have a circular hole 32 aligned with the hole 24 of smaller diameter than the roller 50.

The slide 30 comprises a central portion 36 which fits with a small clearance between the inner edges 28 of the flanges 20 and a pair of outer longitudinal flanges 38 which fit with a small clearance between the inner faces 26 on the side-walls 16, 18. The slide 30 has a lateral lip 46 along one end and a parallel, lateral wall 48 extending in the same direction as the lip 46. The lip 46 and the wall 48 form a pocket 34 for receiving the knurled roller 50.

In use, the body 10 is first fitted to the diagonal run 6 of the safety belt 11 adjacent to the guide 4. The body 10 is positioned around the run 6 such that the face of the belt 11 close to the user is in contact with the base 12 and the shorter ends of the side-walls 16, 18 are adjacent to the guide 4. The slide 30 is inserted between the side-walls 16, 18 of the body 10 such that the lip 46 on the slide 30 is adjacent to the lip 14 of the base 12 and the pocket 34 is aligned with the hole 24 in the side-wall 16. The knurled roller 50 is then inserted through the hole 24 to lie in the pocket 34 adjacent to the run 6 of the belt 11. The stop may now be moved in either direction along the run 6 by gripping the slide 30 and the body 10 between thumb and forefinger to maintain the lip 14 on the body 10 in alignment with the lip 46 on the slide 30. The knurled roller 50 is free to rotate in the pocket 34 and aid the movement of the belt 11 through the stop.

The stop 9 is next positioned close to the guide 4 and locked to the belt 11 by sliding the slide 30 through the body 10 until the roller 50 grips the belt 11 and the flanges 38 of the slide 30 contact the lower surfaces 22 of the flanges 20. The tension in the safety belt 11 exerted by the inertia-reel assembly unit now pulls the stop against the guide 4 and the force is transmitted to the guide 4, thus preventing the pressure upon the user's chest.

To release the stop 9 from the run 6 of the belt 11 the slide 30 is moved through the body 10 in a direction away from the guide 4 until the knurled roller 50 is free from the belt 11 which may then pass through the stop 9 and onto the reel in the usual manner. The movement of the slide 30 through the body 10 in this direction is limited by contact between the lip 14 on the base 12 and the roller 50.

To remove the stop 9 from the run 6 the roller 50 is aligned with the hole 24 and removed from the pocket 34. If a smaller hole 32 is provided a suitable instrument (not shown) may be inserted therethrough to eject the roller 50. The slide 30 and body 10 may then be removed from the run 6 of the belt 11.

In a modified stop 9 shown in Figure 5, the lip 14 is omitted and each flange 20 of the side-walls 16, 18 is formed at its end adjacent to the higher end of each side-wall 16, 18 into an inwardly-directed stop 21. The central portion 36 of the slide 30 has a correspondingly-shaped portion of decreased width 37 which forms shoulders 39. The movement of the slide 30 in the body 10 is limited by abutment of shoulders 39 of the slide 30 upon edges 25 of the stops 21.

It should be noted that in both the embodiment and its modification the surfaces of the stop 9 which contact the safety belt 11 similar to surfaces of conventional safety belt fittings and should not, therefore cause any unacceptable deterioration of the belt 11.

## Claims

1. A stop for an inertia-reel safety belt comprising a body member (10) and a clamp member (30) together defining a passage through the stop for a run of the belt, the body member (10) having a lateral entry to the passage for lateral introduction of an intermediate portion of the belt, the clamp member (30) being captively retained to the body member (10) to close the lateral entry and being movable relatively thereto, between a clamped position and a released position to bring clamping surfaces of the body and clamp members towards and away from each other respectively, characterised in that the clamp member comprises a slide member (30) which is captive in a tapered cavity (16, 18, 20) comprising the passage in the body member (10) and which is slidable longitudinally of the belt passage, and that the clamping surface of the clamp member comprises a roller (50) in a seating (34) in that member.

2. A stop according to claim 1 characterised in that the roller (50) contacts the body member (10) to prevent the slide member (30) being released from the tapered cavity, the slide member being releasable from the tapered cavity to open the lateral entry into the passage when the roller (50) is removed from the stop.

3. A stop according to claim 2, characterised in that the roller (50) is removable along its axis through an aperture (24) in the body member.

4. A stop according to claim 2 or claim 3 characterised in that the passage is defined by a face of the slide member (30), a first wall (12) of the body member opposite to the slide member and portions of a pair of side walls (16, 18) extending from opposite edges of the first wall (12) and having inwardly-directed flanges (20) inclined to the first wall (12) to form the longitudinally tapering cavity between themselves and the first wall in which the slide member is located.

5. A stop according to claim 4, characterised in that each flange (20) has an inwardly-directed lug (21) which engages a respective abutment (39) on the slide member to prevent removal of the slide member from the body by movement beyond its released position when the roller (50) is in the stop.

6. A stop according to claim 4, in which the first wall has a lip (14) which contacts the roller (50) to prevent removal of the slide member (30) from the body member (10) by movement beyond its released position.

7. An inertia-reel safety belt assembly comprising an inertia-reel unit, a first run (8) of a safety belt passing from the inertia-reel unit to a guide (4) adapted to be secured (5) to a structure of a motor vehicle and a second run (6) of the safety belt passing through and beyond the guide (4), the assembly including a stop (9) according to any preceding claim fitted to the second run (6) of the belt adjacent to the guide.

8. An assembly according to claim 7, as appendant to claim 2, wherein the narrower part of the tapered cavity is nearer the guide (4).

## Revendications

1. Un dispositif d'arrêt pour une ceinture de sécurité à tambour à inertie, comprenant un élément corps (10) et un élément pince (30), qui définissent ensemble à travers le dispositif d'arrêt un passage pour un brin de la ceinture, le corps (10) présentant une entrée latérale vers le passage, pour l'introduction latérale d'une partie intermédiaire de la ceinture, la pince (30) étant retenue captive sur le corps (10) pour mermer l'entrée latérale et pouvant se déplacer par rapport à ce corps entre une position serrée et une position desserrée, pour rapprocher ou éloigner l'une de l'autre les surfaces de serrage du corps et de la pince respectivement, caractérisé en ce que la pince comprend on coulisseau (30) qui est captif dans une cavité à section décroissante (16, 18, 20) constituant le passage formé dans le corps (10) et qui peut coulisser dans la direction longitudinale du passage de ceinture, et en ce que la surface de serrage de la pince comprend un rouleau (50) logé dans un logement (34) de cet élément.

2. Un dispositif d'arrêt selon la revendication 1, caractérisé en ce que le rouleau (50) entre en contact avec le corps (10) pour empêcher le coulisseau (30) de sortir de la cavité, à section décroissante, le coulisseau pouvant être dégagé de la cavité à section décroissante pour ouvrir l'entrée latérale dans le passage lorsque le rouleau (50) est extrait du dispositif d'arrêt.

3. Un dispositif d'arrêt selon la revendication 2, caractérisé en ce que le rouleau (50) peut être extrait le long de son axe, à travers une une ouverture (24) ménagée dans le corps.

4. Un dispositif d'arrêt selon la revendication 2 ou la revendication 2, caractérisé en ce que le passage est délimité par une face du coulisseau (30), une première paroi (12) du corps qui fait face au coulisseau et des portions de deux parois latérales (16, 18) qui partent de bords opposés de la première paroi (12) et comportent des ailes (20) dirigées vers l'intérieur et inclinées vers la première paroi (12) pour former la cavité rétrécie longitudinalement, entre elles et la première paroi, cavité dans laquelle le coulisseau est logé.

5. Un dispositif d'arrêt selon la revendication 4, caractérisé en ce que chaque aile (20) comporte un taquet (21) dirigé vers l'intérieur qui attaque une butée correspondante (39) du coulisseau pour empêcher le retrait de l'élément coulisseau hors du corps par un déplacement au-delà de sa position desserrée lorsque le rouleau (50) se trouve dans le dispositif d'arrêt.

6. Un dispositif d'arrêt selon la revendication 4, dans lequel la première paroi comporte une lèvre (14) qui entre en contact avec le rouleau (50) pour empêcher l'extraction du coulisseau (30) hors du corps (10) par un déplacement au-delà de la position desserrée.

7. Un ensemble de ceinture de sécurité à tambour à inertie comprenant un dispositif de tambour à inertie, un premier brin (8) d'une ceinture de sécurité allant du dispositif à tambour à inertie à un guide (4) adapté pour être fixé (5) à une structure d'un véhicule à moteur et un deuxième brin (6) de la ceinture de sécurité qui traverse et passe audelà du guide (4), l'ensemble comprenant un dispositif d'arrêt (9) selon l'une des revendications précédentes, monté sur le deuxième brin (6) de la ceinture à proximité du guide.

8. Un ensemble selon la revendication 7, rattaché à la revendication 2, dans lequel la partie la plus étroite de la cavité rétrécie est la plus proche du guide (4).

**Patentansprüche**

1. Sperrvorrichtung für einen Automatik-Sicherheitsgurt, enthaltend ein Hauptbauteil (10) und ein Klemmbauteil (60), die zusammen einen durch die Sperrvorrichtung gehenden Durchgang für eine Bahn des Gurts begrenzen, wobei das Hauptbauteil (10) einen seitlichen Zugang zum Durchgang zur seitlichen Einführung eines Zwischenabschnitts des Gurts aufweist und das Klemmbauteil (30) unter Verschließen des seitlichen Zugangs am Hauptbauteil (10) unverlierbar anbringbar ist und gegenüber diesem zwischen einer Klemmposition und einer Freigabeposition bewegbar ist, um Klemmoberflächen des Haupt- und Klemmbauteils aufeinander zu- bzw. voneinander wegzubewegen, dadurch gekennzeichnet, daß das Klemmbauteil einen Schieber (30) aufweist, der in einem sich verjüngenden, den Durchgang umfassenden Hohlraum (16, 18, 20) im Hauptbauteil (10) gehalten und dort in der Längsrichtung des Gurtdurchgangs verschiebbar ist, und daß die Klemmoberfläche des Klemmbauteile eine Rolle (50) in einem in diesem Bauteil vorgesehenen Sitz (34) enthält.

2. Sperrvorrichtung nach Anspruch 1, dadurch gekennzeichnet, daß zum Verhindern der Freigabe des Schiebers (30) aus dem sich verjüngenden Hohlraum die Rolle (50) mit dem Hauptbauteil (10) in Berührung steht, wobei der Schieber zum Öffnen des seitlichen Zugangs zum Durchgang aus dem sich verjüngenden Hohlraum freisetzbar ist, wenn die Rolle (50) aus der Sperrvorrichtung entfernt ist.

3. Sperrvorrichtung nach Anspruch 2, dadurch gekennzeichnet, daß die Rolle (50) in Längsrichtung ihrer Achse durch eine Öffnung (24) im Hauptbauteil entfernbar ist.

4. Sperrvorrichtung nach Anspruch 2 oder 3, dadurch gekennzeichnet, daß der Durchgang begrenzt ist durch eine Fläche des Schiebers (30), eine dem Schieber gegenüberliegende Erstwand (12) des Hauptbauteils und Abschnitte zweier Seitenwände (16, 18), die von genenüberliegenden Rändern der Erstwand (12) wegragen und nach innen gerichtete Flansche (20) haben, welche gegenüber der Erstwand (12) geneigt sind, um zwischen sich selbst und der Erstwand den länglichen, such verjüngenden Hohlraum auszubilden, in dem der Schieber angeordnet ist.

5. Sperrvorrichtung nach Anspruch 4, dadurch gekennzeichnet, daß jeder Flansch (20) einen nach innen gerichteten Ansatz (21) aufweist, der an einem jeweiligen Anschlag (39) am Schieber angreift, um die Entfernung des Schiebers aus dem Hauptbauteil bei einer Bewegung über seine Freigabeposition hinaus zu verhindern, wenn sich die Rolle (50) in der Sperrvorrichtung befindet.

6. Sperrvorrichtung nach Anspruch 4, bei der die Erstwand eine Lippe (14) aufweist, die mit der Rolle (50) in Berührung kommt, um die Entfernung des Schiebers (30) aus dem Hauptbauteil (10) bei einer Bewegung über seine Freigabeposition hinaus zu verhindern.

7. Automatik-Sicherheitsgurt-Anordnung mit einer Trägheitskräfte ausnutzenden Aufrollvorrichtung, einer ersten Sicherheitsgurtbahn (8), die von der Aufrollvorrichtung zu einer Führung (4) läuft, welche am Aufbau eines Motorfahrzeugs befestigbar (5) ist, und einer zweiten Sicherheitsgurtbahn (6), die durch und über die Führung (4) hinausläuft, sowie mit einer in der Anordnung vorgesehenen Sperrvorrichtung (9) nach einem der vorstehenden Ansprüche, die nahe bei der Führung an der zweiten Sicherheitsgurtbahn (6) angebracht ist.

8. Anordnung nach Anspruch 7, soweit abhängig von Anspruch 2, bei der der engere Teil des sich verjüngenden Hohlraums näher bei der Führung (4) liegt.

FIG.1

FIG. 5

*FIG. 2*

*FIG. 4*

*FIG. 3*

2